# EUROPÄISCHE PATENTSCHRIFT

(11) **EP 0 648 652 B1**
(45) Veröffentlichungstag und Bekanntmachung des Hinweises auf die Patenterteilung: **01.10.1997**
(21) Anmeldenummer: 94107777.8
(22) Anmeldetag: 19.05.1994
(51) Int. Cl.: B60R 22/46

(54) **Vorrichtungen zum Drehantrieb einer Wickelwelle eines Sicherheitsgurtaufrollautomaten**
Rotary drive devices for the reel of a seatbelt retractor
Dispositifs d'entraînement en rotation d'un arbre d'enroulement d'un rétracteur pour ceinture de sécurité

(30) Priorität: 15.10.1993 DE 4335284
(43) Veröffentlichungstag der Anmeldung: 19.04.1995
(73) Patentinhaber: HS Technik und Design Technische Entwicklungen GmbH, 82234 Wessling (DE)
(72) Erfinder: Specht, Martin, Dipl. Ing. (FH), D-82340 Feldafing (DE); Krauss, Walter, Dipl.-Ing., D-80689 München (DE)
(74) Vertreter: Nöth, Heinz, Dipl.-Phys.

(56) Entgegenhaltungen:
- AU-B- 508 214
- DE-A- 2 535 380
- DE-A- 4 304 492
- GB-A- 2 180 734
- JP-A-61 040 421
- ADLER,U 'Automotive Handbook, Edition 2' 1986 , BOSCH GMBH , STUTTGART, DE * Seite 322 - Seite 323 * * 'The Wankel (Rotary) Engine' *

## Beschreibung

Die Erfindung betrifft eine Vorrichtung zum Drehantrieb einer Wickelwelle eines Sicherheitsgurtaufrollautomaten mit den Merkmalen des Oberbegriffs des Anspruchs 1 sowie eine solche Vorrichtung mit den Merkmalen des Oberbegriffs des Anspruchs 15.

Durch eine derartige Vorrichtung sollen im Notfall, beispielsweise bei überhöhter Geschwindigkeitsänderung wie im Crashfall, vor dem Blockieren der Wickelwelle locker aufeinanderliegende Gurtbandlagen auf der Wickelwelle und eine Gurtlose im am Körper eines Fahrzeuginsassen anliegenden Sicherheitsgurtteil beseitigt werden. Die Gefahr der Vorverlagerung des Körpers des Fahrzeuginsassen wird dadurch beseitigt.

Aus der DE-A-4304492 ist eine derartige, die Merkmale des Oberbegriffs des Anspruchs 1 aufweisende Vorrichtung zum Drehantrieb einer Wickelwelle eines Sicherheitsgurtaufrollautomaten bekannt geworden, die ein antreibbares Drehteil aufweist, das in einem Gehäuse drehbar angeordnet ist und durch eine Kupplung mit der Wickelwelle kuppelbar ist. Zwischen dem Drehteil und einer Innenwand des Gehäuses ist wenigstens ein Explosionsraum gebildet, der sich aufgrund der Drehung des Drehteils dreht. Die Vorrichtung enthält des weiteren wenigstens einen Kraftspeicher, der als Treibladung ausgebildet ist, die am Beginn der Drehbewegung mit dem Explosionsraum verbunden ist und zum Ingangsetzen der Drehbewegung des Drehteils durch eine durch Betätigung einer Sensoreinrichtung auslösbaren Zündeinrichtung zündbar ist.

Des weiteren ist aus der DE-A-2535380 eine derartige, die Merkmale des Oberbegriffs des Anspruchs 15 aufweisende Vorrichtung zum Drehantrieb einer Wickelwelle eines Sicherheitsgurtaufrollautomaten bekannt geworden, die ein antreibbares Drehteil aufweist, das in einem Gehäuse drehbar angeordnet ist und durch eine Kupplung mit der Wickelwelle kuppelbar ist. Zwischen dem Drehteil und einer Innenwand des Gehäuses ist wenigstens ein Explosionsraum gebildet, der aufgrund der Drehbewegung des Drehteils expandiert. Die Vorrichtung enthält weiterhin wenigstens eine Treibgasgeneratoranordnung, die durch eine Sensoreinrichtung auslösbar ist. Das Gehäuse weist eine nicht kreisförmige Innenkontur aufweist. Das Drehteil ist ein um seine zentrische Achse kreisender kreisrunder Umlaufkolben, an dem radial nach außen bewegliche Flügel in geradzahliger Anzahl gelagert sind, die außen zur Begrenzung des jeweiligen Explosionsraumes an der Innenkontur des Gehäuses anliegen und im Kolbeninnern über einen jeweiligen Druckkanal mit dem im expandierenden Explosionsraum erzeugten Treibgasdruck für die radial nach außen gerichtete Bewegung beaufschlagt sind.

Schließlich ist eine Rotationskolbenmaschine bekannt geworden (Patent Abstract of Japan vol.10, no. 196 (M-497) & JP-A-61040421), die ein Gehäuse mit einer Trochoidinnenkontur und zwei Eintritts- und zwei Austrittsöffnungen aufweist. Eine durch die Eintrittsöffnungen in den jeweiligen Expansionsraum unter Druck zugeführte und über die Austrittsöffnungen ausgestoßene Arbeitsflüssigkeit versetzt den Rotationskolben in Drehbewegung, wobei Drehmomentschwankungen reduziert werden.

Im Hinblick auf den genannten Stand der Technik liegt der Erfindung die Aufgabe zugrunde, bei einer gattungsgemäßen Vorrichtung den Schubkraftverlauf am Drehteil zu verbessern und Belastungsspitzen abzubauen.

Diese Aufgabe wird erfindungsgemäß durch eine Vorrichtung mit den Merkmalen des Anspruchs 1 sowie durch eine Vorrichtung mit den Merkmalen des Anspruchs 15 gelöst. Vorteilhafte Ausgestaltungen der Erfindung sind in den abhängigen Ansprüchen angegeben.

Mit der erfindungsgemäßen Vorrichtung erzielt man eine Kraftübertragung der von den verschiedenen Kraftspeichern erzeugten Kraft auf möglichst kurzem und direktem Weg auf die Wickelwelle. Ferner ist es möglich, die Anschubkraft der Treibgasladungen so zu dosieren, daß in Aufeinanderfolge bei Zündung der Treibgasladungen eine progressiv ansteigende Schubkraft auf das Drehteil ausgeübt wird. Auf diese Weise wird vermieden, daß zu Beginn der Drehung das vom Drehteil vermittelte Drehmoment auf die Wickelwelle ruckartig übertragen wird. Bei der Erfindung wird vielmehr ein kontinuierlich ansteigendes Drehmoment innerhalb der kurzen zur Verfügung stehenden Zeit auf die Wickelwelle ausgeübt.

Erfindungsgemäß werden die Treibgasladungen nacheinander gezündet, und zwar immer dann, wenn der Explosionsraum am jeweiligen Ort der Treibgasladung ankommt. Es können hierzu für jede Treibgasladung eine zugeordnete Zündeinrichtung vorgesehen sein, die, gesteuert durch den Drehteilumlauf, zur Zündung gebracht werden. In vorteilhafter Weise sind jedoch die Treibgasladungen in den Folgestufen so ausgebildet, daß sie durch die Temperatur des vorher gezündeten Treibgases durch Eigenzündung gezündet werden. Auf diese Weise läßt sich ebenfalls eine fortlaufende aufeinanderfolgende Zündung der einzelnen Treibgasladungen erreichen. Auch eine mechanische Anzündung der nachfolgenden Treibgasladungen durch das sich drehende Drehteil ist möglich.

Am Drehteil kann eine Kupplungsbetätigungseinrichtung vorgesehen sein. Durch diese Kupplungsbetätigungseinrichtung können Kupplungselemente in eine Kupplungsstellung gebracht werden, in welcher zwischen dem Drehteil und der Wickelwelle über die Kupplungselemente ein Kraftschluß hergestellt wird. Die Kupplungsbetätigungseinrichtung kann in der Weise ausgebildet sein, daß durch die Drehteildrehung die Bewegung der Kupplungselemente in die Kupplungsstellung bewirkt wird.

Anhand der Figuren wird an Ausführungsbeispielen die Erfindung noch näher erläutert. Es zeigt:
- Fig. 1:: schematisch ein Ausführungsbeispiel mit einem Drehteil, das ähnlich wie ein Flügelrad angetrieben wird;
- Fig. 2:: in perspektivischer Darstellung eine Antriebsvorrichtung mit einem Kreiskolbenantrieb;
- Fig. 3 bis 7: in Seitenansicht verschiedene Betriebsstellungen des Kreiskolbenantriebs der Fig.2;
- Fig. 8:: ein weiteres Ausführungsbeispiel;
- Fig. 9:: ein Ausführungsbeispiel für einen Kreiskolbenantrieb mit einer Kupplungseinrichtung, über welche der Kreiskolbenantrieb mit der Wickelwelle verbunden werden kann; und
- Fig. 10:: eine Seitenansicht des in Fig. 9 gezeigten Ausführungsbeispiels.

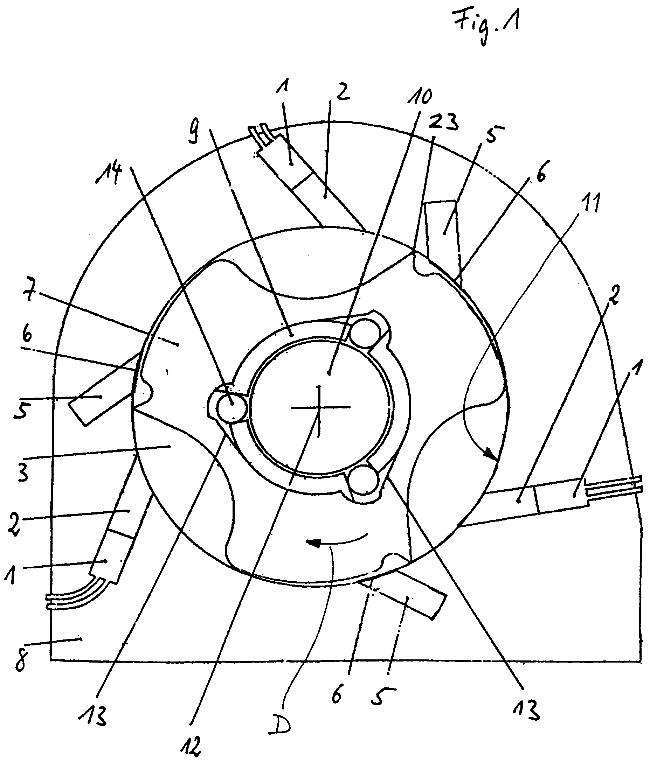

Bei dem in Fig. 1 dargestellten Ausführungsbeispiel ist in einem Gehäuse 8 ein Drehteil 7, das nach dem Flügelradprinzip angetrieben wird, in einem zylindrischen Hohlraum drehbar gelagert. Das Drehteil 7 ist an seinem Umfang an einer zylindrischen Innenwand 11 des zylindrischen Hohlraumes drehbar gelagert. Beim dargestellten Ausführungsbeispiel ist das Drehteil 7 koaxial zur Wickelwellenachse 12 gelagert. Beim dargestellten Ausführungsbeispiel sind am Umfang des Drehteils 7 drei Ausnehmungen vorgesehen, welche Explosionsräume 3 bilden. Am Umfang der zylindrischen Innenwand 11 sind Treibladungen 2 und 5 in Drehrichtung (Pfeil D) angeordnet. Die Treibladungen 2 bzw. 5 sind in Hohlräumen angeordnet, die in spitzen Winkeln gegenüber der zylindrischen Innenwand 11 verlaufen. Die Treibladungen 2 sind mit Zündvorrichtungen 1 versehen. Diese Zündvorrichtungen können in bekannter Weise, beispielsweise elektrisch, gezündet werden. Auf eine Treibladung 2, welche eine Zündvorrichtung 1 aufweist, folgt eine Treibladung 5 in Drehrichtung. Die Treibladung 5 ist so ausgebildet, daß sie durch die Temperatur, welche im Explosionsraum 3 herrscht, gezündet werden kann. Beim dargestellten Ausführungsbeispiel sind jeweils drei Anordnungen von Treibladungen vorgesehen. Anstelle dieser Anordnung kann auch nur eine Treibladung 2 mit einer Zündvorrichtung 1 vorgesehen sein, auf welche in entsprechenden Abständen Treibladungen 5 mit Selbstzündung durch die im Explosionsraum 3 herrschende Temperatur folgen. Diese Treibladungen 5 sind dann um den gesamten Umfang der zylindrischen Innenwand 11 verteilt. Beim dargestellten Ausführungsbeispiel ist es möglich, die Treibladungen 2 gleichzeitig zu zünden. Es ist jedoch auch möglich, die Treibladungen 2 in zeitlicher Aufeinanderfolge zu zünden. Insbesondere dann, wenn nur ein Explosionsraum 3 vorgesehen ist, werden in zeitlicher Aufeinanderfolge die jeweiligen Treibladungen dann gezündet, wenn der Explosionsraum 3 bei der Drehung am Ort der jeweiligen Treibladung ankommt. Der Explosionsraum 3 bewegt sich auf einem Kreisring um die Wickelwellenachse 12. Dieser Kreisring ist nach außen begrenzt durch die zylindrische Innenwand 11. Während dieser Drehung kann der Explosionsraum sich vergrößern.

Die Treibladungen 5 können durch Verschlußstopfen 6 verschlossen sein. Durch eine Abstreifkante 23 am Umfang des Drehteiles 7 werden bei der Drehung die Verschlußstopfen 6 abgestreift, so daß die Temperatur im Explosionsraum 3 auf die Treibladungen 5 zur Selbstzündung einwirkt. Durch die Kante 23 kann auch eine mechanische Zündung der Treibladung 5 bewirkt werden.

Das Drehteil 7 ist hohl ausgebildet. In seinem Hohlraum ist eine Kupplung angeordnet. Die Kupplung besteht aus einem Führungsring 9. Im Führungsring sind als Kugeln ausgebildete Kupplungselemente 14 in Normalposition gehalten. Die nach innen gerichtete Fläche im Hohlraum des Drehteils 7 besitzt eine Kupplungsbetätigungseinrichtung 13 in Form rampenartig verlaufender Flächen. Bei der Drehung des Drehteiles 7 greifen diese rampenartig verlaufenden Flächen als Kupplungsbetätigungseinrichtungen 13 an den Kupplungselementen an und schieben diese radial nach innen, so daß sie in Eingriff kommen mit einem axial verlaufenden Ansatzstück der Wickelwelle 10. Bei dieser radialen Bewegung werden die Kupplungselemente 14 durch den Führungsring 9 geführt. Hierdurch wird ein Kraftschluß zwischen der Wickelwelle 10 und dem Drehteil 7 über die Kupplungselemente 14 hergestellt. Anstelle der Kugeln können auch Greiferbacken als Kupplungselemente 14 vorgesehen sein.

Die Drehbewegung des Drehteils 7 wird in Gang gesetzt durch Zünden der Treibladung 2. Beim Weiterdrehen des Drehteils 7 werden die nachfolgenden Ladungen 5 durch Selbstzündung gezündet, so daß ein ständiger Antrieb des Drehteils 7 in Drehrichtung D erfolgt. Wie schon erläutert, können in Nachfolgestufen auch mehrere Treibladungen 5, die um den ganzen Umfang des Gehäuseinnenraumes 11 verteilt sind, vorgesehen sein. Das Zünden des Zünders 1 erfolgt durch Betätigung einer nicht näher dargestellten Sensoreinrichtung, welche trägheitssensitiv auf eine überhöhte Fahrzeuggeschwindigkeitsänderung reagiert.

Sobald der Kraftschluß zwischen Wickelwelle und Drehteil hergestellt ist, wird eine nicht näher dargestellte Festhalteeinrichtung, z.B. Sollbruchstelle , mit welcher der Führungsring 9 im Normalbetrieb ortsfest gegenüber dem Gehäuse 8 gehalten worden ist, gelöst. Der Führungsring 9 dreht sich dann beim Antrieb der Wickelwelle 10 mit.

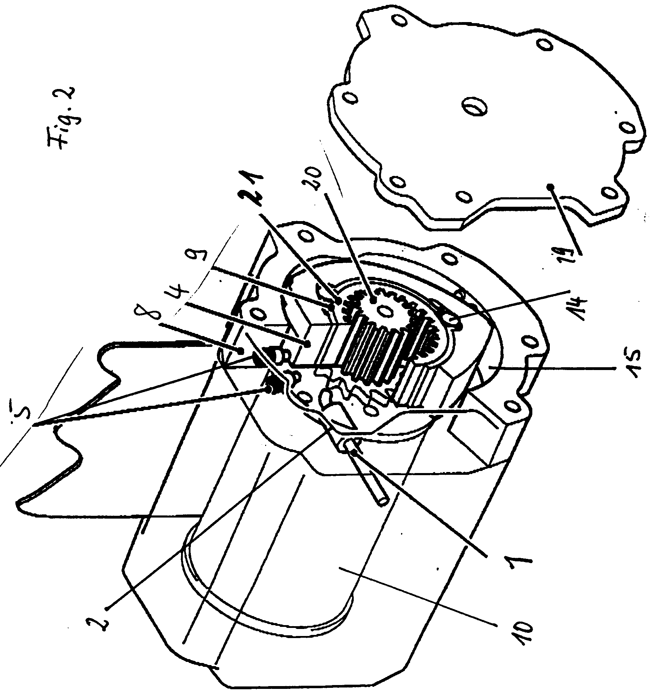

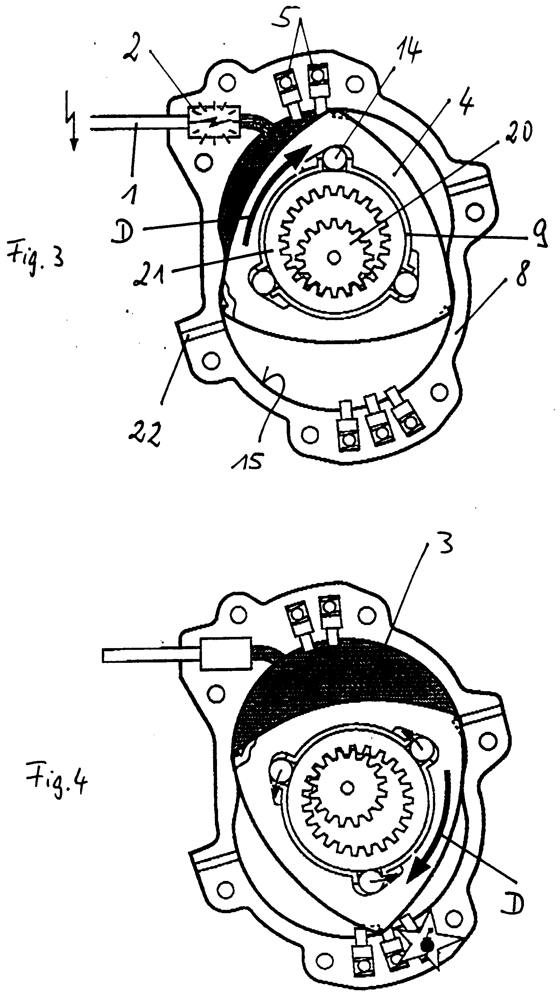

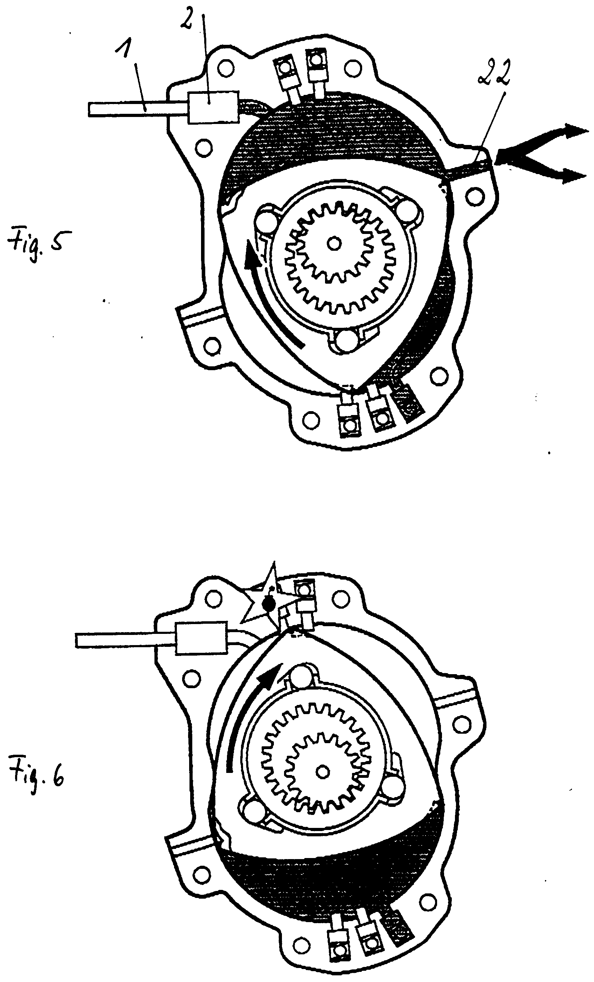

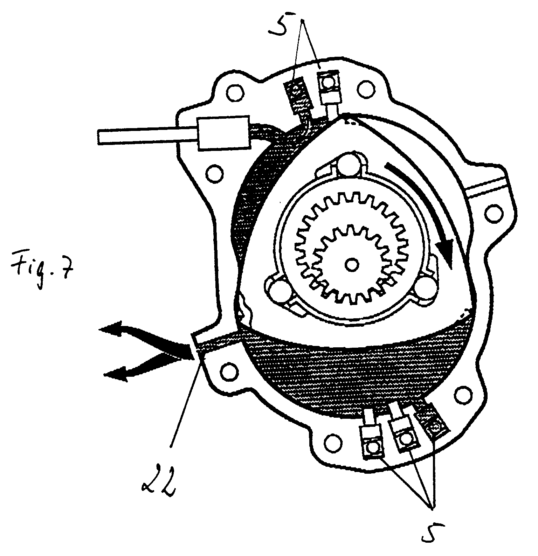

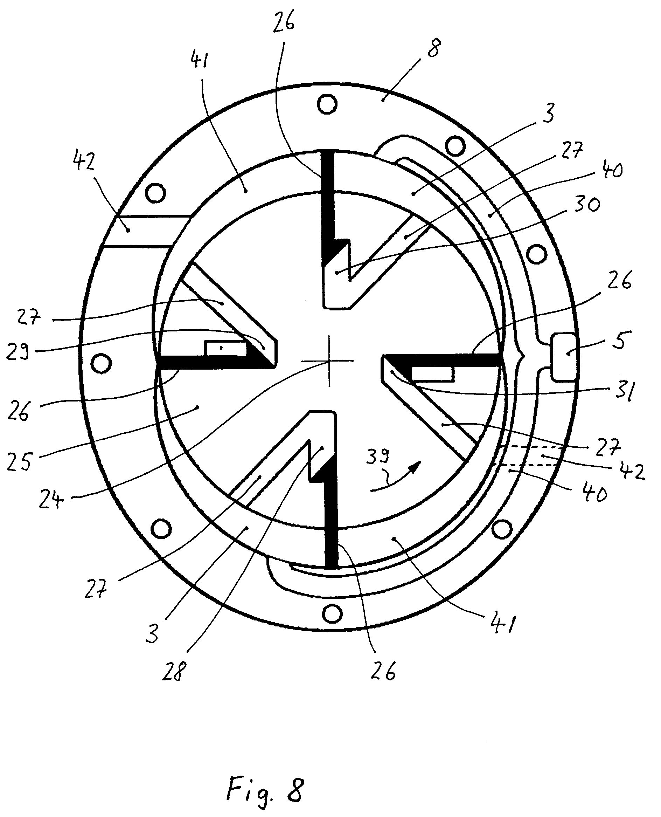

Bei dem in der Figur 2 dargestellten Ausführungsbeispiel ist das Drehteil als Kreiskolben 4 ausgebildet. Eine Innenwand 15 im Gehäuse 8 ist als Trochoide ausgebildet. Der Kreiskolben liegt, wie aus den Figuren 3 bis 7 zu ersehen ist, jeweils an drei Stellen an der Innenwand 15 an, so daß bei der Kolbendrehung der jeweilige Explosionsraum 3 expandiert und somit ein Expansionsraum entsteht, in welchem das Treibgas sich ausdehnt und die Kreiskolbendrehung bewirkt. Das Gehäuse 8 ist durch einen Deckel 19 abgedeckt.

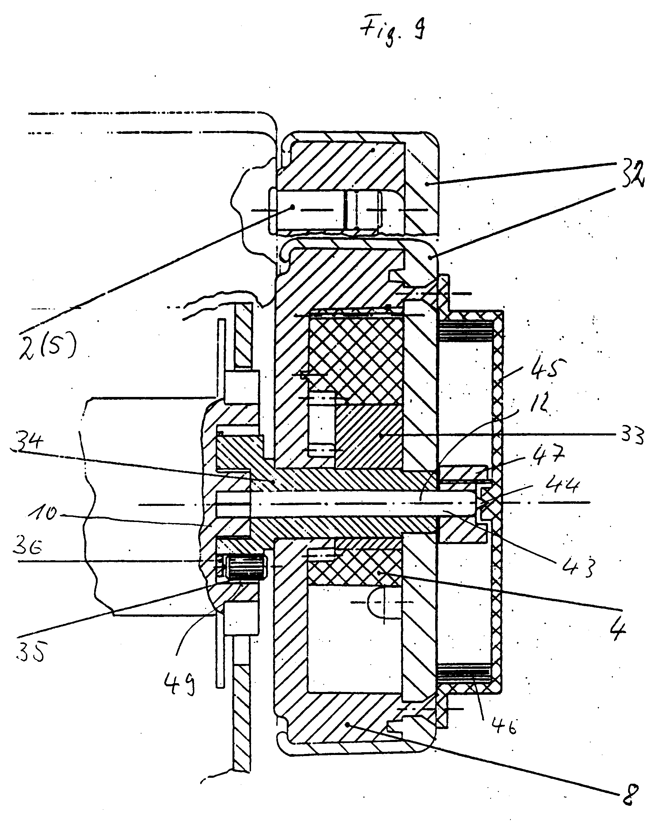

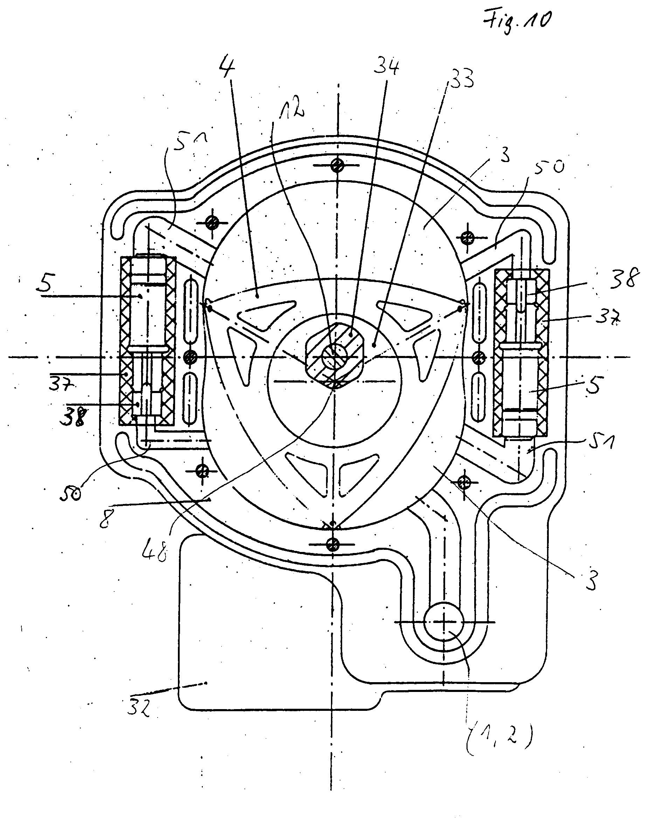

Die Kreiskolbendrehung wird ausgelöst durch Zündung, insbesondere elektrische Anzündung der Treibladung 2 im Gasgenerator (Fig. 3). Bei der Drehung des Kreiskolbens 4 werden in bekannter Weise auf mechanischem Wege nachfolgende Treibladungen 5 in Gasgeneratoren mechanisch gezündet. Es ist jedoch auch möglich, daß eine Selbstzündung durch die im Expansionsraum 3 herrschende Treibgastemperatur erfolgt. Nach Erreichen des maximalen Expansionsvolumens, welches in Fig. 4 dargestellt ist, wird, wie in Fig. 5 zu ersehen ist, im zweiten Explosionsraum bzw. Expansionsraum einer der Gasgeneratoren 5 gezündet und der Drehantrieb des Kreiskolbens fortgesetzt. Nach Erreichen des maximalen Expansionsvolumens wird aus dem jeweiligen Expansionsraum durch einen Auslaß 22 Treibgas ausgeblasen, wie das in den Figuren 5 und 7 dargestellt ist. Durch die aufeinanderfolgende Antriebswirkung der Gasgeneratoren 5 kann der Kreiskolben gegebenenfalls auch in mehrfache Umdrehung versetzt werden.

Durch die Drehung des Kreiskolbens werden wie beim Ausführungsbeispiel in der Fig. 1 die als Kugeln ausgebildeten Kupplungselemente 14 radial nach innen bewegt, so daß sie in kraftschlüssigen Eingriff mit einem Innenzahnkranz 21 kommen. Auf diese Weise wird ein Kraftschluß hergestellt zwischen dem Kreiskolben 4 und dem Innenzahnkranz 21. Der Innenzahnkranz 21 greift in ein Antriebsritzel 20, welches drehfest mit der Wickelwelle 10 verbunden ist. Auf diese Weise wird die Drehbewegung des Kreiskolbens 4 auf die Wickelwelle zur Gurtstraffung übertragen. Durch das beim dargestellten Ausführungsbeispiel zwischen Innenzahnkranz und Antriebsritzel 20 gewonnene Übersetzungsverhältnis wird eine Mehrfachumdrehung der Wickelwelle bei einer Umdrehung des Kreiskolbens 4 erreicht. Dieses Übersetzungsprinzip kann auch bei dem in der Fig. 1 dargestellten Ausführungsbeispiel zum Einsatz kommen.

Das in der Fig. 8 dargestellte Ausführungsbeispiel besitzt als Rotationskolben einen Umlaufkolben 25 mit kreisrundem Querschnitt. Der Umlaufkolben 25 dreht sich beim Antrieb (Drehrichtung 39) um seine zentrische Achse 24. Im Umlaufkolben 25 sind radial verschiebbare Flügel 26 (vier beim dargestellten Ausführungsbeispiel) gelagert. Die äußeren Flügelenden werden gegen die Trochoidinnenstruktur des Gehäuses 8 gedrückt. Hierzu sind die Flügel 26 an ihren inneren Enden mit einem Druck beaufschlagt, der vom Treibgasdruck im expandierbaren Explosionsraum 3 geliefert wird. Dieser Druck wird über Druckkanäle 27 aus dem jeweiligen expandierbaren Explosionsraum 3 in weitere Druckräume 28, 29, 30, 31, in welchen die inneren Flügelenden kolbenartig geführt sind, geleitet. Durch die Flügel 26 werden die jeweiligen expandierbaren Explosionsräume 3 (beim dargestellten Ausführungsbeispiel sind es jeweils zwei Explosionsräume) jeweils von einem radial aus dem Umlaufkolben 25 herausragenden Flügelteil, einem Teil der Außenkontur des kreisrunden Umlaufkolbens 25 und einem Teil der Trochoidinnenkontur des Gehäuses 8 begrenzt. Über die jeweils zwei Druckkanäle 27 sind die ebenfalls expandierbaren Druckräume 28 und 30 mit den expandierbaren Explosionsräumen 3 verbunden.

In die expandierbaren Explosionsräume 3 sind zwei Zündkanäle 40 gerichtet. Über diese Zündkanäle 40 wird der von einem oder mehreren Treibgasgeneratoren 5 erzeugte Treibgasdruck geleitet. Solange die Explosionsräume 3 bei der Kolbendrehung expandieren, werden die Flügel 26 aufgrund des in den Druckräumen 28 und 30 aufgebauten Treibgasdruckes nach außen gedrückt. Hierdurch wird ein dichtes Anliegen der radial äußeren Enden der Flügel 26 an der Trochoidinnenkontur des Gehäuses 8 gewährleistet.

Auf der Rückseite der Flügel 26 befinden sich die jeweils beiden in ihrem Volumen sich verringernden Verdichtungsräume 41. Die in den Verdichtungsräumen 41 enthaltenen verbrauchten Treibgase werden über Auspufföffnungen 42 ausgetrieben. Dies gilt auch für die in den Druckräumen 29 und 31 enthaltenen Gase, welche durch das kolbenartig ausgebildete innere Flügelende über die Druckräume 27 in die jeweils zugeordneten Verdichtungsräume 41 herausgedrückt werden. Während sich die jeweils zwei Flügel 26 bei der Expansionsbewegung in eine radial äußere Position bewegen, bewegen sie sich bei der Verdichtungsbewegung in eine radial innere Position in den jeweiligen inneren Druckräumen 28 bis 31.

Beim dargestellten Ausführungsbeispiel der Fig. 8 werden jeweils zwei expandierende Explosionsräume 3 gebildet, in die die Treibgase der Treibgasgeneratoranordnung 5 geleitet werden. In aufeinanderfolgenden Zündungszyklen werden dann in die bei der Kolbendrehung jeweils gebildeten zwei expandierbaren Explosionsräume 3 in zeitlicher Aufeinanderfolge die Treibgase über die Treibgaskanäle 40 geleitet.

In den Figuren 9 und 10 ist ein Ausführungsbeispiel für den Kupplungsmechanismus gezeigt, mit welchem das vom angetriebenen Kreiskolben 4 gelieferte Drehmoment auf die Wickelwelle 10 übertragen wird. Die Wickelwelle 10 ist über einen axialen Lagerbolzen in einem Spitzenlager 44 in einer Federkassette 45, welche eine Triebfeder 46 aufnimmt, gelagert. Die Triebfeder 46 greift mit ihrem inneren Ende über ein Federherz 47 am Lagerbolzen 43 der Wickelwelle an. Die Federkassette 45 ist an einem Gehäusedeckel 32 befestigt, welcher seinerseits mit dem Gehäuse 8 des Drehkolbenantriebs fest verbunden ist.

Auf dem Lagerbolzen 43 ist drehbar und drehbar gegenüber dem Gehäuse 8 eine Exzenterwelle 34 gelagert. Die Exzenterwelle 34 ist drehfest mit einer Exzenterscheibe 33 verbunden. Auf der Exzenterwelle 33 ist der Kreiskolben 4 um eine Exzenterachse 48 gelagert. Die Drehachse der Exzenterwelle 34 und die Wickelwellenachse 12 liegen koaxial zueinander. Die Exzenterachse 48 dreht sich auf einem Kreis um die Wickelwellenachse 12 bei der Drehung des Kreiskolbens 4.

Wenn der Kreiskolben 4 durch die Treibgase der ersten Treibladung 2 und der nachfolgenden Treibladungen 5 gedreht wird, dreht sich die Exzenterwelle 34 mit. In einem Kupplungskäfig 36 der Exzenterwelle 34 sind Kupplungswalzen 35 gelagert. Bei der Drehung der Exzenterwelle 34 werden die Kupplungswalzen 35 radial nach außen bewegt, so daß sie mit Kupplungsgegenflächen 49, welche an die Wickelwelle 10 angeformt sind, in kraftübertragenden Eingriff kommen. Auf diese Weise wird die Drehbewegung des Kreiskolbens 4 auf die Wickelwelle 10 übertragen.

Die Zündung der auf die erste Treibladung 2 nachfolgenden weiteren Treibladungen 5 erfolgt mit Hilfe von druckbetätigten Zündungseinrichtungen 37. Diese besitzen jeweils einen in einem Zündkäfig kolbenartig beweglichen Schlagzünder 38. Der jeweilige Schlagzünder 38 wird mit dem Druck im expandierenden Explosionsraum 3 über einen Zündkanal 50 beaufschlagt und auf den Zünder des Gasgenerators 5 aufgeschlagen. Die gezündeten Treibgase werden dann über einen jeweiligen Treibgaskanal 51 in den expandierbaren Explosionsraum 3 eingeleitet. Durch die Drehung des Kreiskolbens 4 wird damit selbsttätig in zeitlicher Aufeinanderfolge jeweils zum richtigen Zeitpunkt die jeweilige Treibladung 5 gezündet und der Kolben fortlaufend während des Strammvorgangs angetrieben.

## Patentansprüche

1. Vorrichtung zum Drehantrieb einer Wickelwelle (10) eines Sicherheitsgurtaufrollautomaten mit einem antreibbaren Drehteil (4, 7), das in einem Gehäuse (8) drehbar angeordnet ist und einer Kupplung, mit welcher das angetriebene Drehteil (4, 7) mit der Wickelwelle (10) kuppelbar ist, wobei zwischen dem Drehteil (4, 7) und einer Innenwand (11) des Gehäuses (8) wenigstens ein Explosionsraum (3) gebildet ist, der aufgrund der Drehung des Drehteils (4, 7) sich dreht, und mit wenigstens einem ersten als Treibladung (2) ausgebildeten Kraftspeicher, welche Treibladung (2) am Beginn der Drehbewegung mit dem Explosionsraum (3) verbunden ist und zum Ingangsetzen der Drehbewegung des Drehteils (4, 7) durch eine durch Betätigung einer Sensoreinrichtung auslösbaren Zündereinrichtung (1) entzündbar ist,
**dadurch gekennzeichnet,**
daß entlang dem Drehweg des Explosionsraums (3) wenigstens ein weiterer als Treibladung (2, 5) ausgebildeter Kraftspeicher angeordnet ist, der dann zündbar ist, wenn der Explosionsraum (3) bei der Drehung des Drehteils (4, 7) den Ort der weiteren Treibladung (2, 5) erreicht.

2. Vorrichtung nach Anspruch 1, dadurch gekennzeichnet, daß die der ersten Treibgasladung (2) bei der Explosionsraumdrehung folgende(n) Treibgasladung(en) (5) durch die im Explosionsraum (3) herrschende Treibgastemperatur oder mechanisch durch das Drehteil entzündbar ist bzw. sind.

3. Vorrichtung nach Anspruch 1, dadurch gekennzeichnet, daß die der ersten Treibgasladung (2) folgende(n) Treibgasladung(en) (5) durch eine Zündeinrichtung (1) entzündbar ist bzw. sind.

4. Vorrichtung nach einem der Ansprüche 1 bis 3, dadurch gekennzeichnet, daß der Abstand zwischen aufeinanderfolgenden Treibgasladungen (2, 5) kleiner ist als die Ausdehnung des Explosionsraumes (3) in Drehrichtung.

5. Vorrichtung nach einem der Ansprüche 1 bis 4, dadurch gekennzeichnet, daß durch die aufeinanderfolgenden Treibgasladungen (2, 5) eine progressive Anschubkraft auf das Drehteil (7) ausgeübt wird.

6. Vorrichtung nach einem der Ansprüche 1 bis 5, dadurch gekennzeichnet, daß an der Innenseite des Drehteils (4, 7) eine Kupplungsbetätigungseinrichtung (13) vorgesehen ist.

7. Vorrichtung nach einem der Ansprüche 1 bis 6, dadurch gekennzeichnet, daß durch die Drehbewegung des Drehteils (4, 7) Kupplungselemente (14) in eine Kupplungsstellung geführt sind, in welcher ein Kraftschluß zwischen der Wickelwelle (10) und dem Drehteil (4, 7) hergestellt ist.

8. Vorrichtung nach Anspruch 7, dadurch gekennzeichnet, daß eine Führungseinrichtung (9) für die Kupplungselemente (14) gegenüber dem sich drehenden Drehteil (4, 7) so lange ortsfest gehalten ist, bis der Kraftschluß zwischen Wickelwelle (10) und Drehteil (4, 7) durch die Kupplungselemente (14) hergestellt ist.

9. Vorrichtung nach Anspruch 7 oder 8, dadurch gekennzeichnet, daß das Drehteil (4, 7) um seine Drehachse einen Hohlraum (18) aufweist, in welchem die Kupplungselemente (14) angeordnet sind und in welchen ein mit der Wickelwelle (10) drehfest verbundenes Eingriffsteil für die Kupplungselemente (14) ragt.

10. Vorrichtung nach einem der Ansprüche 1 bis 9, dadurch gekennzeichnet, daß das Drehteil als Kreiskolben (4) ausgebildet ist.

11. Vorrichtung nach einem der Ansprüche 1 bis 9, dadurch gekennzeichnet, daß das Drehteil als Flügelrad (7) ausgebildet ist.

12. Vorrichtung nach einem der Ansprüche 1 bis 9, dadurch gekennzeichnet, daß das Drehteil (7) an seinem Umfang an der zylindrischen Innenwand (11) des Gehäuses (8) drehbar gelagert ist und daß wenigstens ein Explosionsraum (3) am Umfang des Drehteils (7) vorgesehen ist.

13. Vorrichtung nach Anspruch 12, dadurch gekennzeichnet, daß das Drehteil (7) koaxial zur Wickelwelle (10) im Gehäuse (8) drehbar gelagert ist.

14. Vorrichtung nach einem der Ansprüche 1 bis 12, dadurch gekennzeichnet, daß der Explosionsraum (3) während der Drehung des Drehteils (4) expandiert.

15. Vorrichtung zum Drehantrieb einer Wickelwelle (10) eines Sicherheitsgurtaufrollautomaten mit einem antreibbaren Drehteil (25), das in einem Gehäuse (8) drehbar angeordnet ist und einer Kupplung, mit welcher das angetriebene Drehteil (25) mit der Wickelwelle (10) kuppelbar ist, wobei zwischen dem Drehteil (25) und einer Innenwand (11) des Gehäuses (8) wenigstens ein Explosionsraum (3) gebildet ist, der aufgrund der Drehbewegung des Drehteils (25) expandiert, und mit wenigstens einer Treibgasgeneratoranordnung (5), welche durch eine Sensoreinrichtung auslösbar ist, wobei das Gehäuse eine nicht kreisförmige Innenkontur aufweist, wobei das Drehteil (25) ein um seine zentrische Achse (24) kreisender kreisrunder Umlaufkolben (25) ist, wobei am Umlaufkolben (25) radial nach außen bewegliche Flügel (26) gelagert sind, die außen zur Begrenzung des jeweiligen Explosionsraumes (3) an der Innenkontur des Gehäuses (8) anliegen und im Kolbeninnern über einen jeweiligen Druckkanal (27) mit dem im expandierenden Explosionsraum (3) erzeugten Treibgasdruck für die radial nach außen gerichtete Bewegung beaufschlagt sind, wobei eine geradzahlige Anzahl an Flügeln (26) im Umlaufkolben (25) gelagert sind,
**dadurch gekennzeichnet,**
daß die Innenkontur des Gehäuses (8) eine Trochoidinnenkontur ist und daß in jeweils zwei von je einem Flügel (26), der Außenkontur des Umlaufkolbens (25) und der Trochoidinnenkontur des Gehäuses (8) gebildete und bei der Kolbendrehung expandierende Explosionsräume (3) gezündetes Treibgas in zeitlich aufeinanderfolgenden Zündungszyklen geleitet ist.

16. Vorrichtung nach Anspruch 15, dadurch gekennzeichnet, daß im Kolbeninnern expandierbare Druckräume (28 - 31) gebildet sind, in denen das jeweils innere, durch den Treibgasdruck beaufschlagte Flügelende kolbenartig bewegbar geführt ist.

17. Vorrichtung nach einem der Ansprüche 1 bis 16, dadurch gekennzeichnet, daß die Zündung der auf die erste gezündete Treibladung (2) folgenden Treibladungen (5) durch druckempfindliche Zündeinrichtungen (37) erfolgt, die durch den im jeweiligen Explosionsraum (3) gebildeten Treibgasdruck bei der Kolbendrehung gezündet werden.

## Claims

1. Apparatus for the rotary drive of a winding shaft (10) of an automatic safety belt retractor comprising a drivable rotary member (4, 7) which is rotatably arranged in a housing (8) and a coupling with which the driven rotary member (4, 7) can be coupled to the winding shaft (10), wherein formed between the rotary member (4, 7) and an inside wall (11) of the housing (8) is at least one explosion chamber (3) which rotates by virtue of the rotary movement of the rotary member (4, 7), and at least one first force storage means which is in the form of a propellent charge (2) and which at the beginning of the rotary movement is connected to the explosion chamber (3) and which can be fired to start the rotary movement of the rotary member (4, 7) by a firing device (1) which can be triggered by actuation of a sensor device,
characterised in that
arranged along the rotary path of the explosion chamber (3) is at least one further force storage means which is in the form of a propellent charge (2, 5) and which can be fired when the explosion chamber (3) reaches the location of the further propellent charge (2, 5) in the rotary movement of the rotary member (4, 7).

2. Apparatus according to claim 1 characterised in that the propellent gas charge or charges (5) which follow the first propellent gas charge (2) in the rotary movement of the explosion chamber can be fired by the propellent gas temperature obtaining in the explosion chamber (3) or mechanically by the rotary member.

3. Apparatus according to claim 1 characterised in that the propellent gas charge or charges (5) which follow the first propellent gas charge (2) can be fired by a firing device (1).

4. Apparatus according to one of claims 1 to 3 characterised in that the spacing between successive propellent gas charges (2, 5) is less than the extent of the explosion chamber (3) in the direction of rotation.

5. Apparatus according to one of claims 1 to 4 characterised in that a progressive boost force is applied to the rotary member (7) by the successive propellent gas charges (2, 5).

6. Apparatus according to one of claims 1 to 5 characterised in that a coupling actuating device (13) is provided at the inside of the rotary member (4, 7).

7. Apparatus according to one of claims 1 to 6 characterised in that coupling elements (14) are moved by the rotary movement of the rotary member (4, 7) into a coupling position in which a force-locking engagement is made between the winding shaft (10) and the rotary member (4, 7).

8. Apparatus according to claim 7 characterised in that a guide device (9) for the coupling elements (14) is held stationarily relative to the rotating rotary member (4, 7) until the force-locking engagement is made between the winding shaft (10) and the rotary member (4, 7) by the coupling elements (14).

9. Apparatus according to claim 7 or claim 8 characterised in that the rotary member (4, 7) has around its axis of rotation a cavity (18) in which the coupling elements (14) are arranged and into which projects an engagement member for the coupling elements (14), the engagement member being non-rotatably connected to the winding shaft (10).

10. Apparatus according to one of claims 1 to 9 characterised in that the rotary member is in the form of a rotary piston (4).

11. Apparatus according to one of claims 1 to 9 characterised in that the rotary member is in the form of a bladed wheel (7).

12. Apparatus according to one of claims 1 to 9 characterised in that the rotary member (7) is rotatably mounted at its periphery at the cylindrical inside wall (11) of the housing (8) and at least one explosion chamber (3) is provided at the periphery of the rotary member (7).

13. Apparatus according to claim 12 characterised in that the rotary member (7) is rotatably mounted in the housing (8) coaxially with respect to the winding shaft (10).

14. Apparatus according to one of claims 1 to 12 characterised in that the explosion chamber (3) expands during the rotary movement of the rotary member (4).

15. Apparatus for the rotary drive of a winding shaft (10) of an automatic safety belt retractor comprising a drivable rotary member (25) which is arranged rotatably in a housing (8) and a coupling with which the driven rotary member (25) can be coupled to the winding shaft (10), wherein formed between the rotary member (25) and an inside wall (11) of the housing (8) is at least one explosion chamber (3) which expands by virtue of the rotary movement of the rotary member, and at least one propellent gas generator arrangement (5) which can be triggered by a sensor device, wherein the housing has a non-circular internal contour, wherein the rotary member (25) is a circular rotary piston (25) which revolves about its central axis (24), wherein mounted on the rotary piston (25) are radially outwardly movable blades (26) which bear against the internal contour of the housing (8) at the outside to delimit the respective explosion chamber (3) and which in the piston interior are subjected by way of a respective pressure passage (27) to the effect of the propellent gas pressure produced in the expanding explosion chamber (3), for the radially outwardly directed movement, wherein an even number of blades (26) are mounted in the rotary piston (25),
characterised in that
the internal contour of the housing (8) is a trochoidal internal contour and that in firing cycles which occur in succession in respect of time fired propellent gas is passed into two respective explosion chambers (3) which are formed by a respective blade (26), the external contour of the rotary piston (25) and the trochoidal internal contour of the housing (8) and which expand in the rotary movement of the piston.

16. Apparatus according to claim 15 characterised in that formed in the piston interior are expandable pressure chambers (28-31) in which the respective inner blade end which is subjected to the effect of the propellent gas pressure is guided for piston-like movement.

17. Apparatus according to one of claims 1 to 16 characterised in that firing of the propellent charges (5) which follow the first fired propellent charge (2) is effected by pressure-sensitive firing devices (37) which are fired upon rotary movement of the piston by the propellent gas pressure formed in the respective explosion chamber (3).

## Revendications

1. Dispositif pour la commande de rotation d'un enrouleur (10) d'un rétracteur de ceinture de sécurité, avec une partie tournante (4, 7) entraînable, montée avec une possibilité de rotation dans un carter (8), avec un accouplement, qui permet d'accoupler la partie tournante entraînée (5, 7) à l'enrouleur (10), une chambre d'explosion (3), au moins, qui tourne par suite de la rotation de la partie tournante (4, 7), étant formée entre cette dernière (4, 7) et une paroi interne (11) du carter (8), et avec un premier accumulateur d'énergie, au moins, réalisé sous forme de charge propulsive (2), laquelle charge (2) étant reliée, au début du mouvement de rotation, à la chambre d'explosion (3) et pouvant être enflammée, pour la mise en train du mouvement de rotation de la partie tournante (4, 7), par un système d'allumage (1) déclenchable par l'actionnement d'un dispositif de détection, caractériséen ce qu'un autre accumulateur d'énergie, au moins, réalisé sous forme de charge propulsive (2, 5), est disposé sur le parcours de rotation de la chambre d'explosion (3), cet accumulateur pouvant être allumé lorsque la chambre d'explosion (3), lors de la rotation de la partie tournante (4, 7), atteint l'emplacement de l'autre charge propulsive (2, 5).

2. Dispositif suivant la revendication 1, caractérisé en ce que la (les) charge(s) propulsive(s) (5), qui suit (suivent) la première charge propulsive (2) lors de la rotation de la chambre d'explosion, est (sont) inflammable(s) par la température du gaz propulseur régnant dans la chambre d'explosion (3), ou mécaniquement, par la partie tournante.

3. Dispositif suivant la revendication 1, caractérisé en ce que la (les) charge(s) propulsive(s) (5), qui suit (suivent) la première charge propulsive (2), peut (peuvent) être enflammée(s) par un système d'allumage (1).

4. Dispositif suivant l'une des revendications 1 à 3, caractérisé en ce que la distance entre des charges propulsives successives (2, 5) est inférieure à l'extension de la chambre d'explosion (3) dans le sens de rotation.

5. Dispositif suivant l'une des revendications 1 à 4, caractérisé en ce qu'une force de poussée progressive est exercée sur la partie tournante (7) par les charges propulsives (2, 5) successives.

6. Dispositif suivant l'une des revendications 1 à 5, caractérisé en ce qu'un système d'embrayage (13) est prévu sur la face interne de la partie tournante (4, 7).

7. Dispositif suivant l'une des revendications 1 à 6, caractérisé en ce que des éléments d'accouplement (14) sont amenés dans une position d'embrayage par le mouvement de rotation de la partie tournante (4, 7), position dans laquelle une force d'adhérence est produite entre l'enrouleur (10) et la partie tournante (4, 7).

8. Dispositif suivant la revendication 7, caractérisé en ce qu'un dispositif de guidage (9) pour les éléments d'accouplement (14) est maintenu en place par rapport à la partie tournante (4, 7) en rotation, jusqu'à ce que la force d'adhérence entre l'enrouleur (10) et la partie tournante (4, 7) soit produite par les éléments d'accouplement (14).

9. Dispositif suivant l'une des revendications 7 et 8, caractérisé en ce que la partie tournante (4, 7) présente un espace creux (18) autour de son axe de rotation, espace dans lequel sont disposés les éléments d'accouplement (14), et dans lequel pénètre un élément de prise, solidaire de l'enrouleur (10), pour les éléments d'accouplement (14).

10. Dispositif suivant l'une des revendications 1 à 9, caractérisé en ce que la partie tournante est réalisée sous forme de piston rotatif (4).

11. Dispositif suivant l'une des revendications 1 à 9, caractérisé en ce que la partie tournante est réalisée sous forme de roue à ailettes (7).

12. Dispositif suivant l'une des revendications 1 à 9, caractérisé en ce que la partie tournante (7) est logée avec une possibilité de rotation, sur son pourtour, sur la paroi interne cylindrique (11) du carter (8), et en ce qu'une chambre d'explosion (3), au moins, est prévue sur le pourtour de la partie tournante (7).

13. Dispositif suivant la revendication 12, caractérisé en ce que la partie tournante (7) est montée avec une possibilité de rotation dans le carter (8), d'une manière coaxiale par rapport à l'enrouleur (10).

14. Dispositif suivant l'une des revendications 1 à 12, caractérisé en ce que la chambre d'explosion (3) est détendue pendant la rotation de la partie tournante (4).

15. Dispositif pour la commande de rotation d'un enrouleur (10) d'un rétracteur de ceinture de sécurité, avec une partie tournante (25) entraînable, montée avec une possibilité de rotation dans un carter (8), avec un accouplement, qui permet d'accoupler la partie tournante (25) entraînée à l'enrouleur (10), une chambre d'explosion (3), au moins, détendue par suite du mouvement de rotation de la partie tournante (25), étant formée entre cette dernière (25) et une paroi interne (11) du carter (8), et avec un générateur de gaz propulseur (5), au moins, qu'un système de détection permet de déclencher, le carter présentant un contour interne non circulaire, la partie tournante (25) étant un piston rotatif cylindrique (25) qui tourne autour de son axe central (24), des ailettes (26), mobiles dans le sens radial externe, étant montées sur le piston rotatif (25), ces ailettes s'appliquant côté externe sur le contour interne du carter (8) pour délimiter la chambre d'explosion (3) respective, et étant sollicitées à l'intérieur du piston, par le biais d'un conduit de pression respectif (27), par la pression du gaz propulseur, générée dans la chambre d'explosion (3) détendue, pour leur déplacement dirigé dans le sens radial externe, un nombre pair d'ailettes (26) étant prévu dans le piston rotatif (25), caractérisé en ce que le contour interne du carter (8) est trochoïdal, et en ce que du gaz propulseur, enflammé dans deux chambres d'explosion (3) respectivement formées par une ailette (26), le contour externe du piston rotatif (25) et le contour interne trochoïdal du carter (8), et détendues lors de la rotation du piston, est injecté par cycles d'allumage successifs dans le temps.

16. Dispositif suivant la revendication 15, caractérisé en ce que des chambres de pression expansibles (28 - 31) sont formées à l'intérieur du piston, chambres dans lesquelles est guidée et peut être déplacée, à la manière d'un piston, l'extrémité interne respective des ailettes sollicitée par la pression du gaz propulseur.

17. Dispositif suivant l'une des revendications 1 à 16, caractérisé en ce que l'allumage des charges propulsives (5), qui suivent la première charge propulsive (2) enflammée, est produit par des systèmes d'allumage (37), sensibles à l'effet de la pression et amorcés lors de la rotation du piston par la pression du gaz propulseur, générée dans la chambre d'explosion (3) respective.
